# EUROPEAN PATENT SPECIFICATION

(11) **EP 2 384 847 B1**
(45) Date of publication and mention of the grant of the patent: **04.07.2018**
(21) Application number: 10425149.1
(22) Date of filing: 04.05.2010
(51) Int. Cl.: B23P 15/00, B01F 7/00, A21C 1/00, B23K 31/02, B23K 101/12

(54) **Tank for kneading machine**
Tank für Knetmaschine
Réservoir pour pétrisseur

(43) Date of publication of application: 09.11.2011
(73) Proprietor: SANCASSIANO S.p.A., I-12060 Roddi d'Alba (Cuneo) (IT)
(72) Inventor: Drocco, Davide, 12060 Roddi d'Alba (Cuneo) (IT)
(74) Representative: Frontoni, Stefano

(56) References cited:
- EP-A1- 0 000 512
- DE-A1-102007 025 117
- FR-A1- 2 643 842
- GB-A- 2 222 935
- US-A- 1 685 187
- US-A1- 2002 075 751

## Description

The subject of the present invention is a tank for a kneading machine and a method for the production of a tank for a kneading machine as per the preamble of claims 1 and 11. Such a tank and a method are known from US 1,685,178 A. In particular, the present invention teaches producing a tank particularly suited to being applied on rotating-tank kneading machines.

In general, in the field of kneading machines, the tank in which the dough mix is obtained comprises a bottom and a wall of the vessel welded together. According to the known art, both the bottom of the tank and the vessel wall are obtained via cold deformation of plane sheet metal.

The above conventional method intrinsically presents various limits in terms of precision and reproducibility of the desired geometry. The tanks obtained in the conventional way can present, in fact, in addition to considerable deviations from the reference geometry, also significant structural differences within a single lot of tanks of the same type.

All this has adverse repercussions on the quality of the dough. In fact, obviously, given the same type of kneading machine, the structural differences between the tanks result, during working of the dough, in differences in terms of temperature that the dough reaches during operation, of homogeneity of the dough produced, and in general, of energy absorbed by the dough while it is being worked.

In view of the above, it is hence clear that the quality of the dough can vary significantly from machine to machine and that any intervention of control of the quality must necessarily be aimed at the individual machine, thus causing a considerable increase in the production costs thereof.

Furthermore, in the case of rotating-tank kneading machines, the tanks produced in the way indicated above are further coupled to a support prearranged for operative connection to the means of said kneading machines that are designed to drive the tanks in rotation. In a preliminary way, said tanks are, however, subjected to an extremely precise operation of inspection and adjustment of shape, to guarantee respect of the pre-set geometrical tolerances, necessary for proper operation of the machine. Usually, said intervention involves minor deformations of specific regions of the tank that the person responsible for carrying out the inspection must identify and correct one by one. An equally delicate and burdensome intervention is then necessary for fitting together the tank and the aforesaid support, guaranteeing that the axis of the tank is perfectly aligned with the axis of rotation of said support, once again in order to ensure proper operation of the kneading machine.

From the above it emerges then that the installation of a tank of a conventional type on rotating-tank kneading machines is somewhat laborious and costly.

The object of the present invention is to overcome the drawbacks referred to above. To achieve said purpose the subject of the present invention is a tank having the characteristics recalled specifically in the ensuing claims.

In various embodiments, the tank comprises a vessel wall and a bottom fixed thereto, in which the bottom comprises a portion prearranged for direct engagement with driving means of the kneading machine.

In various embodiments, the bottom comprises a portion prearranged to constitute a contrast surface for a bottom portion of the vessel wall.

The claims form an integral part of the technical teaching provided herein in relation to the invention.

The invention will now be described, purely by way of non-limiting example, with reference to the annexed drawings, in which:
- Figures 1 illustrate a tank according to the known art and successive steps of production of said tank;
- Figure 2 is a cross-sectional view of a tank according to one embodiment;
- Figure 3 is a cross-sectional view of a detail of the tank of Figure 2;

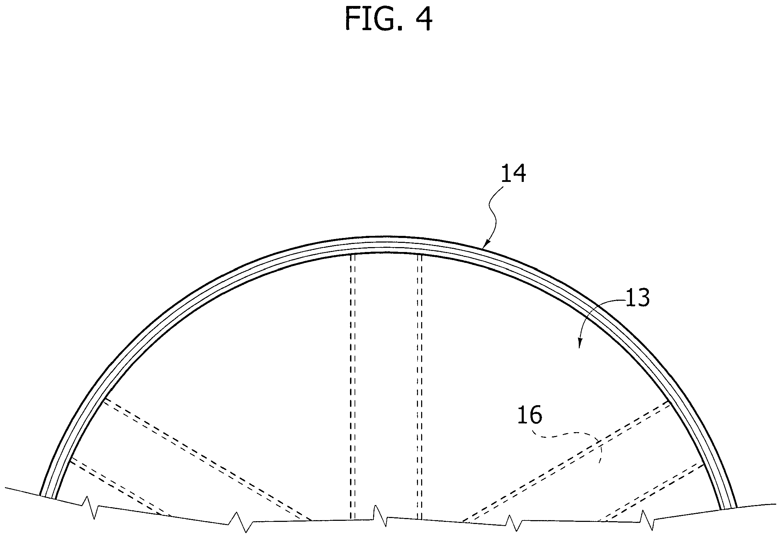

- Figure 4 is a top plan view of a detail of the bottom of the tank of Figure 2; and
- Figures 5 are cross-sectional views of a detail in the tank of Figure 2.

Illustrated in the ensuing description are various specific details aimed at providing an in-depth understanding of the embodiments. The embodiments may be obtained without one or more of the specific details, or with other methods, components, materials, etc. In other cases, known structures, materials, or operations are not shown or described in detail so that various aspects of the embodiments will not be obscured.

The reference to "an embodiment" or "one embodiment" in the context of the present description indicates that a particular configuration, structure, or characteristic described in relation to the embodiment is comprised in at least one embodiment. Hence, phrases such as "in an embodiment" or "in one embodiment", which may be present in different points of this description, do not necessarily refer to one and the same embodiment. Furthermore, particular conformations, structures, or characteristics can be combined adequately in one or more embodiments.

The reference numbers appearing herein are used only for reasons of convenience and hence do not define the sphere of protection or the scope of the embodiments.

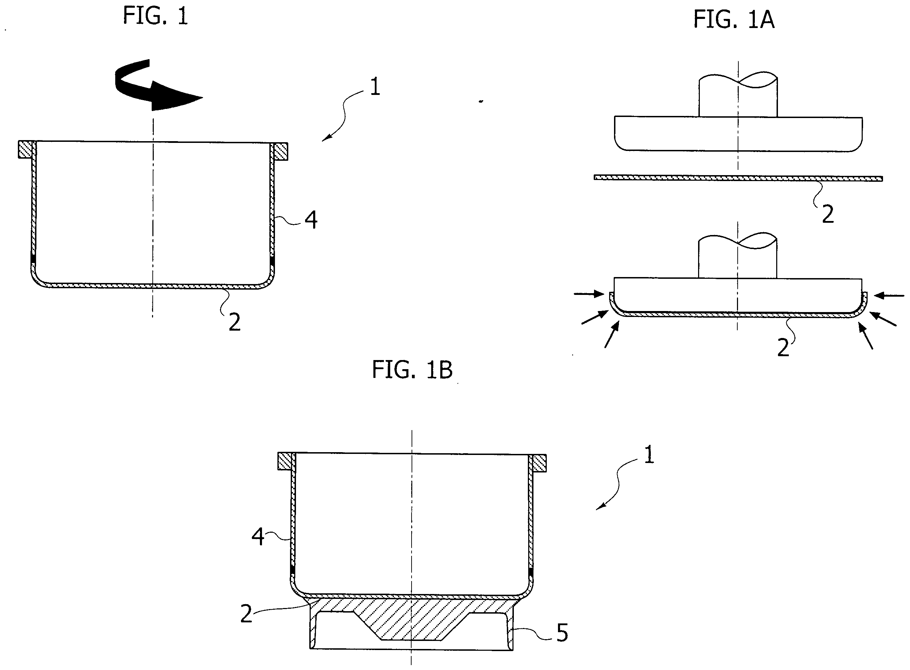

Figure 1 illustrates a tank 1 according to the known art. Said tank comprises a bottom 2 and a vessel wall 4, welded together. As may be seen in Figure 1a, the bottom 2 is obtained via successive steps of cold pressing of plane sheet metal. The vessel wall 4 is instead obtained via rolling. As already mentioned above and schematically illustrated in Figure 1B, in the case where the tank is to be used on a rotating-tank kneading machine, the tank is further coupled to a support 5 prearranged for being operatively connected to driving means of the kneading machine.

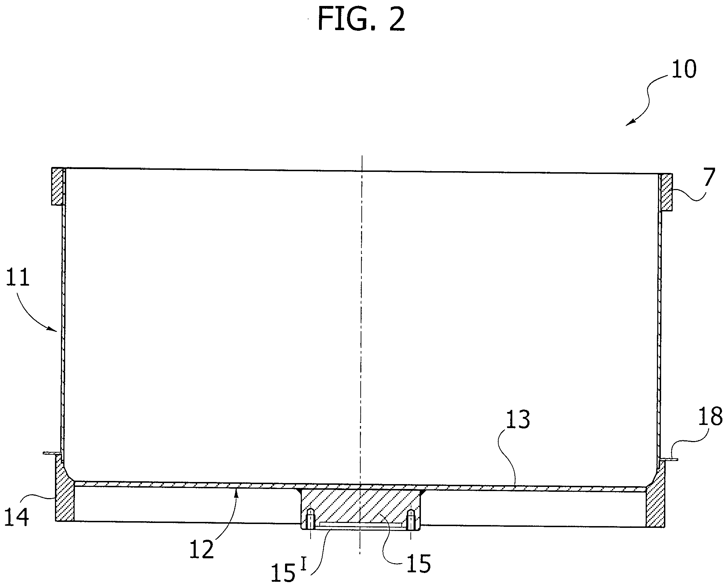

Figure 2 illustrates a tank according to an embodiment of the present invention. Designated as a whole by the reference number 10 is the tank. It is constituted by a vessel wall 11 and by a bottom 12, fixed together by welding.

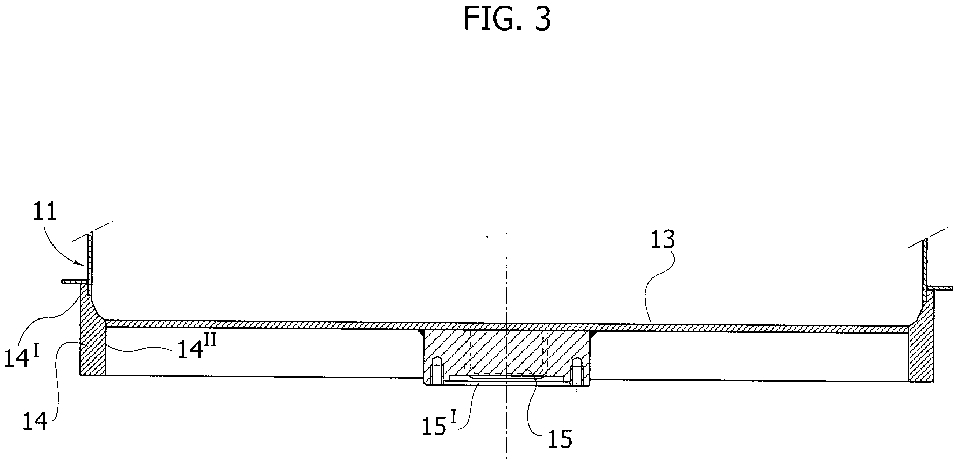

Shown in detail in Figure 3 is the bottom 12. It comprises a disk 13 defining the inner bottom wall of the tank 10 and a circular band 14, which envelops the disk 13 and to which the disk 13 is fixed by welding.

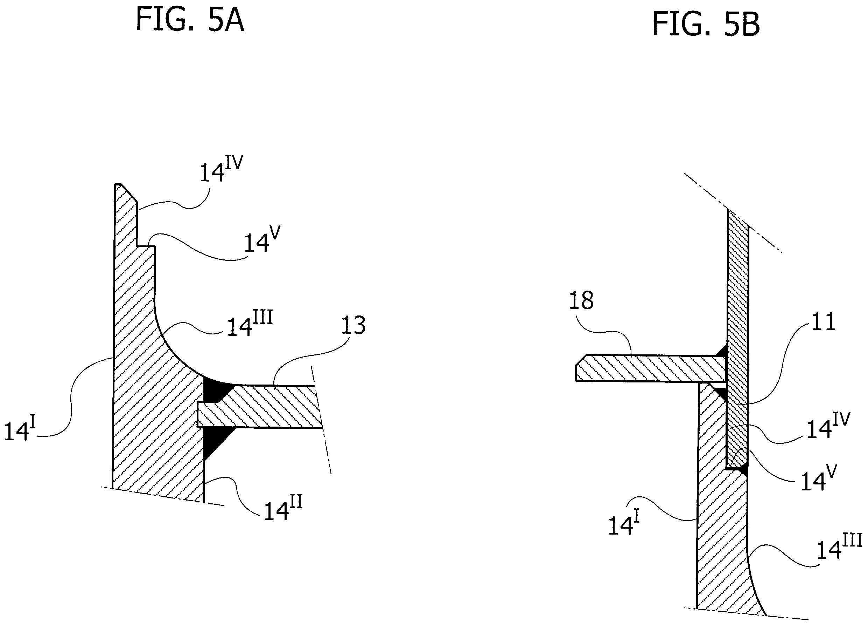

With reference to the detail of Figures 5, the band 14 defines an outer cylindrical surface 14^{I} prearranged, as will be described in what follows, for direct engagement with driving means of the kneading machine. On its inner side, the band 14 defines, instead, from beneath upwards as viewed in Figure 5, an inner cylindrical surface 14^{II}, a radiusing surface 14^{III}, and a further inner cylindrical surface 14^{IV}.

The inner cylindrical surface 14^{II} identifies a portion of larger thickness of the band 14 on which the disk 13 is fixed. In particular, as may be seen in Figure 5B, the disk 13 is welded on its outer rim to a top end portion of the surface 14^{II}.

The cylindrical surface 14^{IV} identifies, instead, a restricted portion of the band 14 that delimits an internal horizontal edge 14^{V}, on which, as may be seen in Figure 5B, the bottom edge of the vessel wall 11 rests. The cylindrical surface 14^{IV} serves instead as contrast wall for the bottom portion of the outer wall of the vessel wall 11, imposing on the latter a perfect circular configuration.

As may be seen in Figure 5B, the surface 14^{III} constitutes a radiusing surface between the bottom wall of the tank, defined by the upper side of the disk 13, and the inner side wall of the tank, defined by the inner wall of the vessel wall 11.

Fixed by welding on the underside of the disk 13 is a central disk 15 prearranged for engagement, via its attachment portions 15', with the structure of the kneading machine, for installation of the tank 10 itself on the latter.

Once again radially fixed on the underside of the disk 13 is a series of sectional elements 16 that connect the disk 15 with the cylindrical surface 14^{II} of the band 14. The sectional elements 16 have a function of stiffening the bottom of the tank, above all in regard to torsional loads about the axis of the tank.

The vessel wall 11 has on its outer top edge a stiffening ring 7, anchored in place by welding.

With reference once again to Figure 5b, a circular ring 18 bears upon the top edge of the band 14, about the vessel wall 11, with the function of constituting a barrier to prevent dribbling of the dough around the outer surface of the tank.

As mentioned previously, the cylindrical surface 14^{I} is prearranged for direct engagement with the means for driving the tank, provided in the kneading machine, which are generally constituted by one or more friction wheels. For proper driving of the tank by said means it is necessary for said surface to have a well-defined geometry. In various embodiments, the cylindrical surface 14^{I} is obtained via a machining operation with removal of stock, for example a machining operation of turning.

In various embodiments, the band 14 is designed to engage the vessel wall so as to impose the desired geometry thereon. As seen above, in the embodiment described previously, this is obtained by envisaging on the band 14 the cylindrical surface 14^{IV}, designed to define a contrast surface for the bottom portion of the vessel wall 11. In various embodiments, the cylindrical surface 14^{IV} is obtained via a machining operation with removal of stock, for example a machining operation of turning.

In various embodiments, the band 14 moreover defines a radiusing surface 14^{III} between the bottom wall of the tank and its inner side wall. It should be noted that the geometry of said surface affects in a determining way the work that the kneading tools perform on the dough. Hence, the fact that said surface is obtained on the band 14 enables an absolutely precise reproduction of the design geometry. In various embodiments, said radiusing surface 14^{III} is obtained via a machining operation with removal of stock, for example a machining operation of turning.

In what follows, the process of production of the tank will be described according to one embodiment.

Said process envisages respective steps for the production of the bottom and of the vessel wall.

With reference to the vessel wall, it is to be noted that it can be produced in any known way to obtain its characteristic tubular conformation. In various embodiments, a plane metal sheet is rolled and then closed by welding. Next, the ring 7 described above is fixed, by welding, on the top portion of said closed metal sheet, to achieve stiffening thereof.

The production of the bottom envisages instead forming, first, the ring or metal band that will then come to constitute the band 14 described above. In various embodiments, said ring is obtained via rolling of a polygonal bar, which is then closed by welding. It should be noted, however, that other methods suited to said purpose can be equally used. Next, welded to the ring or band formed is, in the configuration described previously, the disk 13, and then fixed on the underside of said disk are, once again by welding, the central disk 15 and the sectional elements 16. Finally, the band undergoes a machining operation with removal of stock, for example a machining operation of turning, to produce one or more of the surfaces 14^{I}, 14^{II}, 14^{III}, 14^{IV} and 14^{V} referred to above.

Once the bottom 12 is completed, the vessel wall 11 is then fixed to the bottom itself, and finally the ring 18 is fixed to the band 14.

The tank obtained adopting the process described above is immediately ready to be installed on a kneading machine.

In particular, in the case of applications on rotating-tank kneading machines, said tank can be immediately mounted on the kneading machine, in direct contact with the driving means of said machine designed to drive in rotation the tank itself.

It should be noted that the configuration of the tank described above enables a simpler and effective inspection of the geometries.

In fact, the radiusing surface 14^{III}, the contrast surface 14^{IV}, as also the other portions of the band 14, all co-operate in the function of defining precisely the geometry of the tank, which may hence be reproduced any number of times in as many tanks of the same type.

Furthermore, in various embodiments in which the band 14 comprises a portion designed to come into direct engagement with the driving means of the kneading machine, the geometries of the band 14 guarantee directly, and at the same time, both rotational symmetry of the tank and alignment between the axis of the tank and the axis about which the latter will be set in rotation.

In view of the above, the tank configuration according to the present invention enables guarantee of a greater precision of production and a better reproducibility of the shapes. Said configuration guarantees, in particular, that the tanks of one and the same type have the same geometrical characteristics so that the kneading implements are in the condition to work on the dough in the same way, and consequently a homogeneous quality of dough is obtained for all the machines. Furthermore, the geometrical correspondence between the tanks not only yields advantages as regards working of the dough but also considerable facilitation of the process of cleaning of the tanks themselves, such as for example the fact that the cleaning means can envisage a single configuration for all the tanks.

The turning operation to which the band 14 can be subjected moreover enables even very strict geometrical tolerances to be obtained.

Of course, without prejudice to the principle of the invention, the details of production and the embodiments may vary, even significantly, with respect to what has been illustrated herein purely by way of non-limiting example, without thereby departing from the scope of the annexed claims.

## Claims

1. A tank for a kneading machine, said tank comprising a vessel wall (11) and a bottom (12) fixed to said vessel wall (11),
**characterized in that** said bottom (12) comprises a portion (14) formed by a circular band (14), and a disk (13) designed to define the bottom wall of said tank, around which said band is wound and to which said band is fixed,
said portion being obtained by chip-removing machining, wherein said vessel wall (11) is fixed to said portion (14).

2. The tank according to Claim 1, in which the tank can be driven in rotation by driving means of said machine, **characterized in that** said portion of said bottom is prearranged for direct engagement with said driving means.

3. The tank according to any one of the preceding claims, **characterized in that** said portion has a contrast wall (14^{IV}) for a bottom portion of said vessel wall.

4. The tank according to Claim 2, **characterized in that** said portion defines a substantially cylindrical outer surface (14^{I}) coaxial to said vessel wall, prearranged for direct engagement with said means for driving the tank.

5. The tank according to any one of the preceding claims, **characterized in that** said portion defines a substantially cylindrical inner surface (14^{IV}) designed to constitute a contrast for a bottom portion of said vessel wall.

6. The tank according to any one of the preceding claims, **characterized in that** said portion has an outer surface (14^{I}), prearranged for direct engagement with said means for driving the tank, which is obtained by means of a process of turning.

7. The tank according to any one of the preceding claims, **characterized in that** said portion has a substantially cylindrical inner surface (14^{IV}) designed to constitute a contrast for a bottom portion of said vessel wall, which is obtained by means of a process of turning.

8. The tank according to Claim 1, **characterized in that** it comprises a substantially central portion (15) fixed on the underside of said disk and prearranged for engagement with the structure of said kneading machine.

9. The tank according to Claim 8, **characterized in that** it comprises a circular series of sectional elements (16), fixed on the underside of said disk, which surrounds said central portion, from said central portion said sectional elements extending in a substantially radial direction.

10. The tank according to Claim 1, **characterized in that** said portion defines a radiusing surface (14^{III}) between the bottom wall of the tank and its inner side wall.

11. A method for the production of a tank for a kneading machine, said method comprising the steps of:
- producing a vessel wall (11);
- producing a bottom (12); and
- connecting said bottom to said vessel wall,
said method being **characterized in that** it comprises:
- producing a circular band (14) by chip-removing machining,
- enveloping, with said circular band, a disk (13) designed to define the bottom wall of said tank, and fixing said disk to said circular band;
- fixing said vessel wall (11) to said circular band (14) .

12. The method according to Claim 11, in which the tank can be driven in rotation by driving means of said machine, said method being **characterized in that** said portion of said bottom is obtained so as to be prearranged for direct engagement with said means for driving the tank.

13. The method according to any one of Claims 11 and 12, **characterized in that** said portion is made so as to constitute a contrast wall (14^{IV}) for a bottom portion of said vessel wall.

14. The method according to Claim 11, **characterized in that** it envisages turning on said circular band (14) an outer wall (14^{I}) designed for direct engagement with said driving means.

15. The method according to Claim 11, **characterized in that** it envisages turning on said band (14) an inner wall (14^{IV}) designed to constitute a contrast for a bottom portion of said vessel wall.

## Patentansprüche

1. Behälter für eine Knetmaschine, wobei der Behälter eine Gefäßwand (11) und einen an der Gefäßwand (11) befestigten Boden (12) aufweist,
**dadurch gekennzeichnet, dass** der Boden (12) einen durch ein kreisrundes Band (14) gebildeten Abschnitt (14) und eine Scheibe (13) aufweist, die dazu bestimmt ist, die Bodenwand des Behälters zu definieren und um die das Band gewickelt ist und an der das Band befestigt ist,
wobei der Abschnitt durch spanabhebende Bearbeitung erhalten ist und die Gefäßwand (11) an dem Abschnitt (14) befestigt ist.

2. Behälter nach Anspruch 1, wobei der Behälter von Antriebsmitteln der Maschine in Drehung versetzt werden kann, **dadurch gekennzeichnet, dass** der Abschnitt des Bodens vorab für den direkten Eingriff mit den Antriebsmitteln eingerichtet ist.

3. Behälter nach einem der vorhergehenden Ansprüche, **dadurch gekennzeichnet, dass** der Abschnitt eine Gegenwand (14^{IV}) für einen Bodenabschnitt der Gefäßwand aufweist.

4. Behälter nach Anspruch 2, **dadurch gekennzeichnet, dass** der Abschnitt eine zur Gefäßwand koaxiale und im Wesentlichen zylindrische Außenfläche (14^{I}) definiert, die vorab für den direkten Eingriff mit den Mitteln zum Antreiben des Behälters eingerichtet ist.

5. Behälter nach einem der vorhergehenden Ansprüche, **dadurch gekennzeichnet, dass** der Abschnitt eine im Wesentlichen zylindrische Innenfläche (14^{IV}) definiert, die dazu bestimmt ist, ein Gegenstück für einen Bodenabschnitt der Gefäßwand darzustellen.

6. Behälter nach einem der vorhergehenden Ansprüche, **dadurch gekennzeichnet, dass** der Abschnitt eine Außenfläche (14^{I}) aufweist, die vorab für den direkten Eingriff mit den Mitteln zum Antreiben des Behälters eingerichtet ist und mit einem Drehverfahren erhalten ist.

7. Behälter nach einem der vorhergehenden Ansprüche, **dadurch gekennzeichnet, dass** der Abschnitt eine im Wesentlichen zylindrische Innenfläche (14^{IV}) aufweist, die dazu bestimmt ist, ein Gegenstück für einen Bodenabschnitt der Gefäßwand darzustellen, und die mit einem Drehverfahren erhalten ist.

8. Behälter nach Anspruch 1, **dadurch gekennzeichnet, dass** er einen im Wesentlichen mittigen Abschnitt (15) aufweist, der an der Unterseite der Scheibe befestigt und vorab für den Eingriff mit der Struktur der Knetmaschine eingerichtet ist.

9. Behälter nach Anspruch 8, **dadurch gekennzeichnet, dass** er eine kreisrunde Reihe von an der Unterseite der Scheibe befestigten Teilelementen (16) aufweist, die den mittigen Abschnitt umgeben, wobei sich die Teilelemente ausgehend von dem mittigen Abschnitt in eine im Wesentlichen radiale Richtung erstrecken.

10. Behälter nach Anspruch 1, **dadurch gekennzeichnet, dass** der Abschnitt eine abgerundete Fläche (14^{III}) zwischen der Bodenwand des Behälters und seiner inneren Seitenwand definiert.

11. Verfahren zur Herstellung eines Behälters für eine Knetmaschine, wobei das Verfahren folgende Schritte umfasst:
- Herstellen einer Gefäßwand (11);
- Herstellen eines Bodens (12); und
- Verbinden des Bodens mit der Gefäßwand,
wobei das Verfahren **dadurch gekennzeichnet ist, dass** es Folgendes umfasst:
- Herstellen eines kreisrunden Bands (14) durch spanabhebende Bearbeitung;
- Umhüllen einer Scheibe (13), die dazu bestimmt ist, die Bodenwand des Behälters zu definieren, mit dem kreisrunden Band und Befestigen der Scheibe an dem kreisrunden Band, und
- Befestigen der Gefäßwand (11) an dem kreisrunden Band (14).

12. Verfahren nach Anspruch 11, bei dem der Behälter von Antriebsmitteln der Maschine in Drehung versetzt werden kann, wobei das Verfahren **dadurch gekennzeichnet ist, dass** der Abschnitt des Bodens so erhalten wird, dass er vorab für den direkten Eingriff mit den Mitteln zum Antreiben des Behälters eingerichtet ist.

13. Verfahren nach einem der Ansprüche 11 und 12, **dadurch gekennzeichnet, dass** der Abschnitt so gebildet wird, dass er eine Gegenwand (14^{IV}) für einen Bodenabschnitt der Gefäßwand darstellt.

14. Verfahren nach Anspruch 11, **dadurch gekennzeichnet, dass** bei diesem das Drehen einer für den direkten Eingriff mit den Antriebsmitteln bestimmten Außenwand (14^{I} an dem kreisrunden Band (14) vorgesehen ist.

15. Verfahren nach Anspruch 11, **dadurch gekennzeichnet, dass** bei diesem das Drehen einer Innenwand (14^{IV}) an dem Band (14) vorgesehen ist, welche dazu bestimmt ist, ein Gegenstück für einen Bodenabschnitt der Gefäßwand darzustellen.

## Revendications

1. Réservoir pour une machine de malaxage, ledit réservoir comprenant une paroi de cuve (11) et un fond (12) fixé à ladite paroi de cuve (11),
**caractérisé en ce que** ledit fond (12) comprend une partie (14) formée par une bande circulaire (14), et un disque (13) conçu pour définir la paroi de fond dudit réservoir, autour duquel ladite bande est enroulée et auquel ladite bande est fixée,
ladite partie étant obtenue par usinage par enlèvement de copeaux, où ladite paroi de cuve (11) est fixée à ladite partie (14).

2. Réservoir selon la revendication 1, dans lequel le réservoir peut être entraîné en rotation par un moyen d'entraînement de ladite machine, **caractérisé en ce que** ladite partie dudit fond est pré-agencée pour s'engager directement avec ledit moyen d'entraînement.

3. Réservoir selon l'une quelconque des revendications précédentes, **caractérisé en ce que** ladite partie a une paroi de contraste (14^{IV}) pour une partie de fond de ladite paroi de cuve.

4. Réservoir selon la revendication 2, **caractérisé en ce que** ladite partie définit une surface externe essentiellement cylindrique (14^{I} coaxiale à ladite paroi de cuve, pré-agencée pour s'engager directement avec ledit moyen d'entraînement du réservoir.

5. Réservoir selon l'une quelconque des revendications précédentes, **caractérisé en ce que** ladite partie définit une surface interne essentiellement cylindrique (14^{IV}) conçue pour constituer un contraste pour une partie de fond de ladite paroi de cuve.

6. Réservoir selon l'une quelconque des revendications précédentes, **caractérisé en ce que** ladite partie a une surface externe (14^{I}, pré-agencée pour s'engager directement avec ledit moyen d'entraînement du réservoir, qui est obtenue par un procédé de tournage.

7. Réservoir selon l'une quelconque des revendications précédentes, **caractérisé en ce que** ladite partie a une surface interne essentiellement cylindrique (14^{IV}) conçue pour constituer un contraste pour une partie de fond de ladite paroi de cuve, qui est obtenue par un procédé de tournage.

8. Réservoir selon la revendication 1, **caractérisé en ce qu'**il comprend une partie essentiellement centrale (15) fixée sur la face inférieure dudit disque et pré-agencée pour s'engager avec la structure de ladite machine de malaxage.

9. Réservoir selon la revendication 8, **caractérisé en ce qu'**il comprend une série circulaire d'éléments sectionnels (16), fixés sur la face inférieure dudit disque, qui entoure ladite partie centrale, à partir de ladite partie centrale, lesdits éléments sectionnels s'étendant dans une direction essentiellement radiale.

10. Réservoir selon la revendication 1, **caractérisé en ce que** ladite partie définit une surface arrondie (14^{III}) entre la paroi de fond du réservoir et sa paroi latérale interne.

11. Procédé pour la production d'un réservoir pour une machine de malaxage, ledit procédé comprenant les étapes qui consistent :
- à produire une paroi de cuve (11) ;
- à produire un fond (12) ; et
- à relier ledit fond à ladite paroi de cuve,
ledit procédé étant **caractérisé en ce qu'**il comprend le fait :
- de produire une bande circulaire (14) par usinage par enlèvement de copeaux,
- d'envelopper, avec ladite bande circulaire, un disque (13) conçu pour définir la paroi de fond dudit réservoir, et de fixer ledit disque à ladite bande circulaire ;
- de fixer ladite paroi de cuve (11) à ladite bande circulaire (14).

12. Procédé selon la revendication 11, dans lequel le réservoir peut être entraîné en rotation par un moyen d'entraînement de ladite machine, ledit procédé étant **caractérisé en ce que** ladite partie dudit fond est obtenue de manière à être pré-agencée pour s'engager directement avec ledit moyen d'entraînement du réservoir.

13. Procédé selon l'une quelconque des revendications 11 et 12, **caractérisé en ce que** ladite partie est réalisée de manière à constituer une paroi de contraste (14^{IV}) pour une partie de fond de ladite paroi de cuve.

14. Procédé selon la revendication 11, **caractérisé en ce qu'**on prévoit un tournage sur ladite bande circulaire (14) d'une paroi externe (14^{I} conçue pour s'engager directement avec ledit moyen d'entraînement.

15. Procédé selon la revendication 11, **caractérisé en ce qu'**on prévoit un tournage sur ladite bande (14) d'une paroi interne (14^{IV}) conçue pour constituer un contraste pour une partie de fond de ladite paroi de cuve.
